# EUROPÄISCHE PATENTSCHRIFT

(11) **EP 1 758 766 B1**
(45) Veröffentlichungstag und Bekanntmachung des Hinweises auf die Patenterteilung: **02.03.2011**
(21) Anmeldenummer: 05742750.2
(22) Anmeldetag: 14.04.2005
(51) Int. Cl.: B60R 16/02, H02J 7/00

(54) **VORRICHTUNG ZUR SPANNUNGSVERSORGUNG EINES STEUERGERÄTS**
VOLTAGE SUPPLY DEVICE OF A CONTROL DEVICE
DISPOSITIF D'ALIMENTATION EN TENSION D'UN APPAREIL DE COMMANDE

(30) Priorität: 25.06.2004 DE 102004030699
(43) Veröffentlichungstag der Anmeldung: 07.03.2007
(73) Patentinhaber: Bayerische Motoren Werke Aktiengesellschaft, 80809 München (DE)
(72) Erfinder: WENG, Karlheinz, 80797 München (DE); EL-DWAIK, Fathi, 80937 München (DE)
(86) Internationale Anmeldenummer: PCT/EP2005/003938
(87) Internationale Veröffentlichungsnummer: WO 2006/000267

(56) Entgegenhaltungen:
- EP-A- 0 499 658
- US-A- 5 497 322
- US-A- 5 693 986

## Beschreibung

Die Erfindung betrifft eine Vorrichtung zur Spannungsversorgung eines in ein Kraftfahrzeug eingebauten Steuergeräts, welches eine überwiegend der Informationsverarbeitung dienende Logikeinheit und eine überwiegend der Ansteuerung von Aktuatoren dienende Leistungseinheit umfasst.

Moderne Kraftfahrzeuge weisen eine hohe Anzahl von Steuergeräten auf, welche unter Umständen auch im Stillstand des Kraftfahrzeugs Energie verbrauchen. Insbesondere im Fall von Fehlfunktionen eines oder mehrerer Steuergeräte kann die Fahrzeugbatterie des Kraftfahrzeugs durch diesen Energieverbrauch erheblich belastet und auf Dauer tiefentladen werden. Wegen der Vernetzung der Steuergeräte untereinander über einen Datenbus kann ein Fehler eines einzigen Steuergerätes dabei auch zu einem erhöhten Energieverbrauch anderer Steuergeräte führen.

Zu den häufigsten Ursachen einer Tiefentladung der Batterie eines Kraftfahrzeuges zählen die folgenden Fälle:
- Ein Steuergerät meldet sich fehlerbedingt nicht vom Datenbus ab. Alle anderen Steuergeräte bleiben ebenfalls aktiv und haben dabei einen gegenüber dem abgeschalteten Zustand erhöhten Energieverbrauch. Die Fahrzeugbatterie kann dadurch mit einem Dauerstrom von mehreren Ampere (z. B. 5 A) belastet werden.
- Ein Steuergerät sendet fehlerbedingt wiederholt Wecksignale an alle anderen am Datenbus angeschlossenen Steuergeräte. Diese gehen dadurch wiederholt in einen aktiven Zustand über und haben dabei einen gegenüber dem abgeschalteten Zustand erhöhten Energieverbrauch. Auch durch solche Fehler kann der Fahrzeugbatterie Strom entnommen werden, der im zeitlichen Durchschnitt im Ampere-Bereich (z. B. 1 A) liegen kann.
- Der Prozessor eines Steuergeräts erbringt fehlerbedingt erhöhte Rechenleistung ohne dabei andere Steuergeräte zu beeinflussen. Die in einem solchen Fall verursachte zusätzliche Stromentnahme aus der Fahrzeugbatterie kann im Bereich mehrerer hundert Milli-Ampére (z. B. 200 mA) liegen

Als Stand der Technik sind verschiedene Vorrichtungen bekannt, durch welche eine Tiefentladung vermieden wird, indem einzelne Verbraucher, sämtliche Verbraucher oder Gruppen von Verbrauchern von ihrer Spannungsversorgung abgetrennt werden. Die Abtrennung geschieht typischerweise durch das Öffnen einer in der Versorgungsleitung eines oder mehrerer Steuergeräte vorgesehenen Schalteinheit (z.B. mono- oder bistabiles Relais). Die Abtrennung kann zeitgesteuert, ereignisgesteuert oder - wie etwa aus der DE 19922331 C1 bekannt - auf Anforderung eines Benutzers erfolgen.

Im Aufbau der Mehrzahl der heute in Kraftfahrzeugen eingesetzten Steuergeräte lassen sich ein überwiegend der Informationsverarbeitung dienender Logikteil und ein überwiegend der Ansteuerung von Aktuatoren dienender Leistungsteil unterscheiden. Gemäß dem Stand der Technik werden beide Teile von einer gemeinsamen Versorgungsleitung mit Spannung versorgt. Über eine solche Versorgungsleitung fließt bei geschlossener Schalteinheit und im Betrieb der Steuergeräte die Summe der Nutzströme aller von dieser Versorgungsleitung versorgten Steuergeräte. Die Schalteinheit ist somit so auszulegen, dass sie mit dem Maximalwert der über die jeweilige Versorgungsleitung fließenden Summe von Nutzströmen belastbar ist. Dabei ist zu beachten, dass bestimmte Funktionalitäten moderner Kraftfahrzeuge (z. B. Aktivlenkung) bereits für ein einzelnes Steuergerät Nutzströme von bis zu 40 A bedingen. Eine entsprechende Auslegung der Schalteinheiten ist zwar technisch machbar, jedoch mit hohen Herstellungskosten verbunden. Somit besteht ein klarer Nachteil des Stands der Technik darin, dass die Abschaltung im Sinne eines Verhinderns der Stromentnahme aus einer Spannungsquelle durch ein Steuergerät mit hohem Nutzstrombedarf durch das Öffnen einer Schalteinheit nur zu sehr hohen Kosten realisierbar ist.

Aufgabe der Erfindung ist es, eine kostengünstige und mit geringem konstruktivem Aufwand erreichbare Vorrichtung zu schaffen, in welcher die durch ein fehlerhaftes Steuergerät verursachte Stromentnahme aus einer Spannungsquelle wirksam verhindert wird.

Die Lösung der Aufgabe gelingt, indem getrennte Versorgungsleitungen für die Spannungsversorgung des überwiegend der Informationsverarbeitung dienenden Teils (Logikeinheit) und des überwiegend der Ansteuerung von Aktuatoren dienenden Teils (Leistungseinheit) eines Steuergerätes vorgesehen werden und nur die Versorgungsleitung der Logikeinheit mit einer Schalteinheit versehen wird.

Der Vorteil der Erfindung besteht darin, dass die in der Versorgungsleitung der Logikeinheit vorgesehene Schalteinheit für die Belastung durch wesentlich geringere Stromstärken ausgelegt und somit wesentlich kostengünstiger realisiert werden kann.

Die Erfindung nutzt die Tatsache aus, dass die Ursache der Mehrzahl der in Steuergeräten auftretenden und für eine Tiefentladung der Fahrzeugbatterie relevanten Fehler in einer fehlerhaften Informationsverarbeitung liegt. Die eingangs beschriebenen Fehlerfälle belegen diesen Sachverhalt. Um die Stromentnahme durch ein fehlerhaftes Steuergerät wirksam zu verhindern, reicht es somit aus, dessen Logikeinheit von der Spannungsversorgung abzutrennen. Das Steuergerät wird dadurch in einen Zustand versetzt, in welchem die Leistungseinheit zwar mit Spannung versorgt wird, jedoch keinen Strom entnimmt.

Die schaltungstechnische Aufteilung in eine Logikeinheit und eine Leistungseinheit ist bei der Mehrzahl heute verwendeter Steuergeräte ohnehin bereits vollzogen oder kann mit geringem konstruktivem Aufwand erreicht werden. Die Verschaltung kann dabei so vorgenommen werden, dass eine Stromentnahme durch die Leistungseinheit nur dann erfolgen kann, wenn auch die Leistungseinheit mit Spannung versorgt ist. Die Konstruktions-, Fertigungs- und Materialkosten für die Ausführung getrennter Versorgungsleitungen statt einer gemeinsamen Versorgungsleitung sind insbesondere in Kraftfahrzeugen mit einer Vielzahl von eingebauten Steuergeräten gegenüber den durch die veränderte Belastung der Schalteinheit erreichbaren Einsparungen vernachlässigbar.

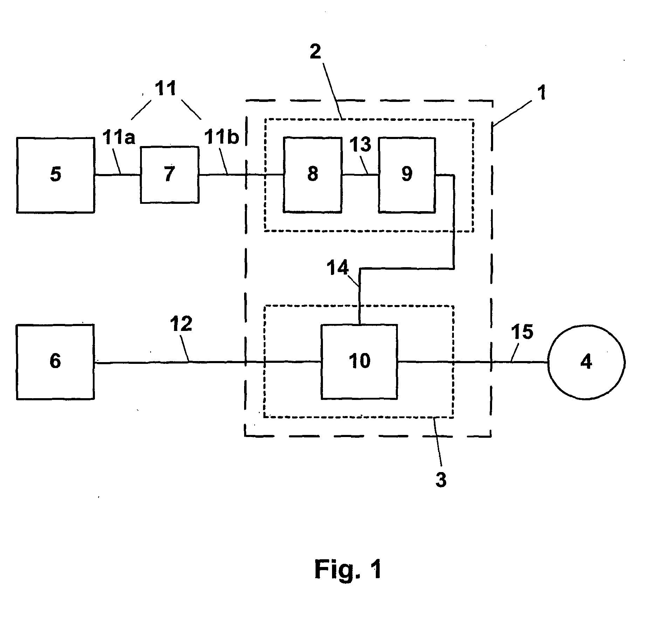

Anhand der beigefügten Zeichnung wird die Erfindung weiter erläutert. Die einzige Zeichnung
- Fig. 1: zeigt eine Prinzipskizze der erfindungsgemäß getrennten Spannungsversor- gung der Logikeinheit und der Leistungseinheit eines Steuergeräts in einem Kraftfahrzeug.

In der Prinzipskizze Fig. 1 wird schematisch die erfindungsgemäße Verschaltung zur getrennten Spannungsversorgung der Logikeinheit und der Leistungseinheit eines Steuergeräts in einem Kraftfahrzeug dargestellt. Das Steuergerät 1 umfasst eine überwiegend der Informationsverarbeitung dienende Logikeinheit 2 und eine überwiegend der Ansteuerung von Aktuatoren 4 dienende Leistungseinheit 3.

Die Logikeinheit 2 wird über eine Versorgungsleitung 11 an eine Spannungsquelle 5, vorzugsweise die Fahrzeugbatterie, angeschlossen. In der Versorgungsleitung 11 ist zwischen den beiden Leitungsstücken 11a und 11b eine Schalteinheit 7 vorgesehen, die geeignet ist, die Logikeinheit von der Spannungsversorgung abzutrennen. Aus Gründen der Übersichtlichkeit ist in der Prinzipskizze Fig. 1 jeweils nur eine Leitung anstelle einer Potential- und einer Masseleitung dargestellt. Die Schalteinheit kann erfindungsgemäß sowohl in der Masseleitung als auch in der Potentialleitung der Spannungsversorgung der Logikeinheit 2 vorgesehen werden.

Innerhalb der Logikeinheit 2 transformiert typischerweise zunächst eine Umformeinheit 8 die Versorgungsspannung auf die Betriebsspannung der Informationsverarbeitungseinheit 9 und legt diese über die Leitung 13 an die Informationsverarbeitungseinheit 9 an. Von der Informationsverarbeitungseinheit 9 wird über die Leitung 14 ein Spannungssignal an die Leistungseinheit 3 übergeben. Die Stromentnahme der Logikeinheit aus der Spannungsquelle 5 über die Leitung 11 entspricht im Wesentlichen dem Stromverbrauch der Umformeinheit 8 und der Informationsverarbeitungseinheit 9. Der über die geschlossene Schalteinheit 7 fließende Strom besitzt eine entsprechend geringe Stromstärke.

Die Leistungseinheit 3 wird über die Versorgungsleitung 12 mit einer Spannungsquelle 6 verbunden. Die Spannungsquelle 6 kann dabei identisch mit der Spannungsquelle 5 sein. Die Leistungseinheit enthält typischerweise einen Leistungsverstärker 10. Liegt an der Eingangsleitung 14 des Leistungsverstärkers ein entsprechendes Spannungssignal an, wird der Aktuator 4 über die Leitung 15 bestromt. Die Stromentnahme erfolgt dabei im Wesentlichen über die Leitung 12aus der Spannungsquelle 6.

Wird die Versorgungsleitung 11 durch ein Öffnen der Schalteinheit 7 aufgetrennt, wird die Logikeinheit 2 nicht mehr mit Spannung versorgt. An der Ausgangsleitung 14 der Informationsverarbeitungseinheit 9 liegt in diesem Zustand ein definiertes Spannungssignal, typischerweise dauerhaft 0 V, an. Der Leistungsverstärker 10 ist so ausgeführt, dass bei Anliegen dieses definierten Spannungssignals eine Stromentnahme des Aktuators 4 über die Versorgungsleitung 12 nicht möglich ist.

Durch die beschriebene und jede vergleichbare Ausführungsform des erfinderischen Gedankens wird somit erreicht, dass bei geöffneter Schalteinheit 7 weder durch die Logikeinheit 2 noch durch die Leistungseinheit 3 einer Spannungsquelle Strom entnommen wird. Die Schalteinheit 7 muss dabei lediglich für den maximalen Nutzstrom der Logikeinheit 2 ausgelegt werden, was einen erheblichen Kostenvorteil gegenüber dem Stand der Technik bedingt.

Für die gerätetechnische Ausführung der Schalteinheit 7 können sämtliche gemäß dem Stand der Technik im Umfeld der Erfindung verbreiteten Ausführungsformen mechanischer oder elektronischer Schalter in Betracht gezogen werden. Gemäß einer bevorzugten Ausführungsform der Erfindung wird als Schalteinheit 7 ein bistabiles Relais eingesetzt. Bistabile Relais besitzen den Vorteil, dass sie keinen Haltestrom zum Beibehalten der aktuellen Schaltstellung benötigen, also selbsthaltend sind.

Aus Gründen der Übersichtlichkeit wird in der beschriebenen Ausführungsform der Erfindung lediglich ein einziger Geräteteil, hier die Logikeinheit, eines einzigen Steuergeräts über eine durch eine Schalteinheit unterbrechbare Versorgungsleitung mit Spannung versorgt. Der erfinderische Gedanke schließt jedoch auch den Fall ein, dass in beliebig vielen Steuergeräten beliebig viele separat vom restlichen Steuergerät mit Spannung versorgbare Teileinheiten über eine gemeinsame Schalteinheit 7 von ihrer Spannungsversorgung abtrennbar sind.

## Patentansprüche

1. Kraftfahrzeug mit einem eingebauten Steuergerät (1) und einer Vorrichtung zur Spannungsversorgung des Steuergeräts (1), welches eine überwiegend der Informationsverarbeitung dienende Logikeinheit (2) und eine überwiegend der Ansteuerung von Aktuatoren (4) dienende Leistungseinheit (3) umfasst,
**dadurch gekennzeichnet, dass**
die Logikeinheit (2) über eine schaltbare Versorgungsleitung (11) mit einer Spannungsquelle (5) verbunden ist und die Leistungseinheit (3) über eine nicht schaltbare Versorgungsleitung (12) mit einer Spannungsquelle (6) verbunden ist.

2. Kraftfahrzeug nach Anspruch 1, **dadurch gekennzeichnet, dass** die Versorgungsleitung (11) der Logikeinheit (2) durch ein selbsthaltendes Relais schaltbar ist.

## Claims

1. A motor vehicle with an installed control apparatus (1) and a voltage supply device for the control apparatus (1), which comprises a logic unit (2) being used primarily for processing information and a power unit (3) being used primarily to activate actuators (4), **characterised in that** the logic unit (2) is connected by a switchable supply line (11) to a voltage source (5) and the power unit (3) is connected by a non-switchable supply line (12) to a voltage source (6).

2. A motor vehicle according to claim 1, **characterised in that** the supply line (11) of the logic unit (2) can be switched by a self-holding relay.

## Revendications

1. Véhicule équipé d'un appareil de commande (1), intégré, ainsi que d'un dispositif d'alimentation en tension de l'appareil de commande (1) ayant une unité logique (2) servant principalement au traitement d'informations et une unité de puissance (3) servant principalement à la commande d'actionneurs (4),
véhicule **caractérisé en ce que**
l'unité logique (2) est reliée par une ligne d'alimentation commutable (11) à une source de tension (5) et l'unité de puissance (3) est reliée par une ligne d'alimentation (12) non commutable à une source de tension (6).

2. Véhicule automobile selon la revendication 1,
**caractérisé en ce que**
la ligne d'alimentation (11) de l'unité logique (2) est commutable par un relais à contact de maintien.
